# EUROPÄISCHE PATENTSCHRIFT

(11) **EP 0 417 600 B1**
(45) Veröffentlichungstag und Bekanntmachung des Hinweises auf die Patenterteilung: **06.03.1996**
(21) Anmeldenummer: 90116926.8
(22) Anmeldetag: 04.09.1990
(51) Int. Cl.: B22C 1/22, B22C 9/00, C08G 59/40, C08G 18/00, C08G 18/58

(54) **Verfahren zur Herstellung von Giessereikernen und -formen**
Method for producing foundry cores and moulds
Procédé pour la fabrication de noyaux de fonderie et de moules

(30) Priorität: 15.09.1989 DE 3930837
(43) Veröffentlichungstag der Anmeldung: 20.03.1991
(73) Patentinhaber: BAYER AG, D-51368 Leverkusen (DE)
(72) Erfinder: Franke, Joachim, Dr., D-5000 Köln 80 (DE); Jakob, Hans-Dieter, D-5090 Leverkusen 3 (DE)

(56) Entgegenhaltungen:
- DE-A- 2 651 806
- DE-A- 3 644 382
- DE-A- 3 807 660
- GB-A- 2 011 432
- US-A- 3 428 110

## Beschreibung

Die Erfindung betrifft ein Verfahren zur Herstellung von Gießereikernen und -formen.

In der Gießereitechnik werden im großen Umfang härtbare Harze verwendet, um Formen und Kerne herzustellen, welche die Abmessungen und Hohlräume der Gußstücke vorgeben bzw. erzeugen. Eine besondere Stellung kommt hier den heiß- und kalthärtbaren Form- und Kernsandbindemitteln auf Phenol-, Furan- und Aminoharzbasis zu, die einen wesentlichen Beitrag zur wirtschaftlichen Produktion in Serienguß und zur Verbesserung der Qualität leisten. Im engen Zusammenhang mit den Verfahrenskosten stehen heute die anfallenden Energiekosten. Daher gewinnen allmählich solche Verfahren eine Vorrangstellung, bei denen möglichst viel Energie gespart wird. Um auch bei großen Serien den Zwang zur Energie- und Kosteneinsparung verfolgen zu können, haben in den letzten Jahren kalte Begasungsverfahren (Cold-Box-Verfahren) immer mehr an Bedeutung als Kernherstellverfahren erlangt. Diese Verfahren stellen - bezogen auf die Verwendung von härtbaren Harzen - eine generell neue Verarbeitungsvariante dar, bei der eine Komponente als Gas oder Aerosol in die Härtungsreaktion eingebracht wird. Das Polyurethanbegasungsverfahren heißt im Gießerei-Sprachgebrauch Cold-Box-Verfahren und ist unter dieser Verfahrensbezeichnung auch in der deutschen Gießereiindustrie eingeführt worden. Wie in den deutschen Patentschriften 1 483 521 sowie 2 011 365 der Firma Ashland Oil beschrieben wird, werden bei diesem Verfahren Polyhydroxyl-Verbindungen und Polyisocyanate mit dem Kernsand gemischt und mit Hilfe eines aminischen Begasungsmittels als Katalysator vernetzt. Es bildet sich ein Polyurethan. Die verwendeten Polyhydroxyl-Verbindungen sind bevorzugt Resole, hergestellt z.B. unter Verwendung von Cobalt- oder Bleinaphtenat als Katalysator. Sie werden in der einschlägigen Literatur häufig unter der Bezeichnung Benzyletherharze geführt. Sie müssen wasserfrei sein, weil Wasser mit dem Polyisocyanat frühzeitig reagieren würde. Zur Viskositätseinstellung auf 130 bis 450 mPa.s enthalten die Phenolresole ca. 30 bis 35 Gew.-% hochsiedende Lösungsmittel, wie aromatische und aliphatische Kohlenwasserstoffe, Ester, Ketone und ähnliches. Als Polyisocyanate werden meistens Diphenylmethan-4,4-diisocyanat oder dessen Derivate verwendet, die ebenfalls mit Lösungsmitteln der obengenannten Stoffklasse verdünnt werden. Die Cold-Box-Bindemittel sind im allgemeinen so eingestellt, daß sie vornehmlich im Verhaltnis 1:1 mit Polyisocyanat verwendet werden. Die Gesamtbindermenge (einschließlich Lösungsmittelanteil) beträgt ca. 1-2 % und der Katalysator ca. 0,02 bis 0,10 Gew.-% (beides bezogen auf Sand). Verfahrenstechnisch wird so vorgegangen, daß zunächst der Kernsand in den Kernkasten geschossen wird; danach wird mit einen Amin-Luft-Gemisch als Gas oder Aerosol begast. Bei den Aminen handelt es sich im allgemeinen und Triethyl-, Dimethylethyl- oder Dimethylisopropylamin, die mit einem Druck von 0,2 bis 2 bar in den Kernkasten eingeblasen werden. Die Restgase werden mit erwärmter Spülluft oder CO₂-Gas aus dem Kern ausgetrieben und können mit einem Säurewäscher, der mit verdünnter Schwefelsäure oder Phosphorsäure beschickt wird, entsorgt werden. Die Wäscher arbeiten nach dem Gegenstromprinzip. Markante Vorteile dieses Verfahrens sind eine wesentliche Erhöhung der Produktivität, glatte Kernoberflächen infolge des ausgezeichneten Fließvermögens des Sandes beim Verschießen, hohe Maßgenauigkeit durch die kalte Aushärtung und hohe Festigkeiten der Formstoffe bei gleichzeitig extrem kurzen Aushärtezeiten. Ein technischer Nachteil ist die begrenzte Lagerfähigkeit des Kernsandes, da die Polyurethan-Polyadditionsreaktion auch ohne Aminzusatz im Kernsand schon in gewisser Weise anspringt und zusätzlich die Lösungsmittel der Bindemittel- und Polyisocyanatlösungen an der Oberfläche teilweise verdampfen. Daraus resultiert eine Reduzierung der Festigkeiten, wenn der Sand einige Stunden nach der Sandaufbereitung verarbeitet wird. So beträgt die Kaltbiegefestigkeit bei Begasung direkt nach der Sandaufbereitung ca. 5,5 N/mm² ; bei Begasung nach einer Stunde nach der Sandaufbereitung beträgt die Kaltbiegefestigkeit nur noch 4 N/mm² ; nach zwei Stunden ist ein Festigkeitsabfall von 25 % und nach drei Stunden ein Festigkeitsabfall von 60 % festzustellen. Außerdem kann nach ca. acht Stunden nach Sandaufbereitung der Sand nicht mehr verarbeitet werden, weil durch fortgeschrittene Polyurethanreaktion der Sand bereits verfestigt ist.

Aufgabe der Erfindung war deshalb, eine Reaktionsharzmischung zu entwickeln, die eine verbesserte Lagerfähigkeit des aufbereiteten Kernsandes besitzt, ohne daß es nach einigen Stunden zum Abfall der Festigkeitswerte kommt. Eine solche verlängerte Verarbeitungszeit bringt erhebliche Vorteile im Herstellungsverfahren der Kernsande und führt zu beträchtlicher Senkung der Produktionskosten, weil nur noch einmal am Tage oder seltener eine Aufbereitung des Kernsandes mit den Polyurethanrohstoffen vorzunehmen ist. Weiterhin war es Aufgabe der Erfindung, Kernsandbindemittel zu entwickeln mit höheren Festigkeitswerten und höheren Wärmeformbeständigkeiten, wie sie besonders für neuere Gießereianwendungen benötigt werden.

Gegenstand der Erfindung ist ein Verfahren zur Herstellung von Gießereikernen und -formen aus Füllstoffen und einer Reaktionsharzmischung durch Vermischen des Füllstoffes und des Reaktionsharzes und anschließende Härtung, dadurch gekennzeichnet, das als Reaktionsharzmischung eine Mischung aus folgenden Komponenten verwendet wird:
a) 25 bis 99,9 %, bezogen auf Gesamtharzmenge, mindestens eines organischen Polyisocyanates,
b) 0,1 bis 50 %, bezogen auf Gesamtharzmenge, mindestens einer - mindestens zwei Epoxidgruppen aufweisenden - organischen Verbindung und gegebenenfalls
c) 0 bis 50 %, bezogen auf Gesamtharzmenge, von Polyhydroxylverbindungen sowie gegebenenfalls
d) weiteren Hilfs-, Zusatz- und Lösungsmitteln.

In einer bevorzugten Ausführungsform liegt das Verhältnis von reaktivem Isocyanat zu Hydroxylgruppen in der Reaktionsharzmischung bei wenigstens 1,1:1, insbesondere 1,5:1.

Ein besonders geeigneter Füllstoff ist Sand, geeignet sind auch Quarzmehl, Kreide, Aluminiumoxid, Korund, Metallpulver, Keramikpulver oder auch Kunststoffpulver.

Als besonders überraschend anzusehen ist, daß die gegenüber dem Stand der Technik zusätzliche Verwendung von einer - mindestens zwei Epoxidgruppen aufweisenden - organischen Verbindung zu diesen hervorragenden Lagerbeständigkeiten sowie Festigkeitswerten führt. Als weiterhin besonders überraschend anzusehen ist, daß bei einem Verhältnis von reaktivem Isocyanat zu Hydroxylgruppen in der Reaktionsharzmischung von >1,1:1, bevorzugt >1,5:1, gerade auch hier eine verbesserte Lagerbeständigkeit sowie erhöhte Festigkeitswerte festgestellt werden können, wo doch der Stand der Technik lehrt, das bei Über- bzw. Untervernetzung von Polyurethanharzen niedrigere Festigkeitswerte erhalten werden (Gardziella in Becker/Braun-Kunststoffhandbuch, Band 10, Duroplaste, S. 976). Es kann sogar vollständig auf die Anwesenheit von Polyhydroxylverbindungen verzichtet werden, und allein durch Aminkatalyse der Isocyanatepoxidmischung bei Verarbeitungszeiten von mehreren Stunden kann eine Aushärtung erreicht werden. Ebenfalls überraschend ist, daß bei diesen Mischungen, die Begasungszeit, d.h. die Zeit der Katalyse, im Vergleich zum Stand der Technik nicht verlängert werden muß, wie es vom Erkenntnisstand der makromolekularen Chemie zu erwarten wäre.

In einer bevorzugten Ausführungsform wird zumindest ein Teil der Komponente a) mit zumindest einem Teil der Komponente b) in einem vorgeschalteten Reaktionsschritt gemischt und durch Verwendung eines Reaktionsinhibitors lagerstabil eingestellt.

In einer bevorzugten Ausführungsform wird zumindest ein Teil der Komponente a) mit zumindest einem Teil der Komponente b) in einem vorgeschalteten Reaktionsschritt zu einem Oxazolidinon- und Isocyanuratgruppen aufweisenden Zwischenprodukt umgesetzt und die Reaktion bei Umsetzung von max. 65 % der im Ausgangsgemisch vorliegenden Isocyanatgruppen durch Zugabe eines Reaktionsinhibitors lagerstabil gestoppt. Trotz der Verwendung dieser Reaktionsinhibitoren ist eine erneute Katalyse durch das Begasungsamin ohne weiteres möglich.

Bei der Ausgangskomponente a) handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ,

in der
n = 2 bis 4, vorzugsweise 2,
und

- Q: einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen,
oder einen araliphatischen Kohlenwasserstoffrest mit 8 bis 15, vorzugsweise 8 bis 13 C-Atomen,
bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′ -diisocyanat, Naphthylen-1,5-diisocyanat.

Ferner kommen beispielsweise erfindungsgemäß in Frage: Triphenylmethan-4,4′,4˝-triisocyanat, Polyphenyl-polymethylenpolyisocyanate, wie sie durch Anilin-Formaldehyd-Kondensation und anschließende Phosgenierung erhalten werden (GB 874 430 und GB 848 672), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate (US 3 394 164 und 3 644 457), acylierte Harnstoffgruppen aufweisende Polyisocyanate (DE-PS 1 230 778), Biuretgruppen aufweisende Polyisocyanate (US 3 124 605, 3 201 372 und 3 124 605), durch Telomerisationsreaktionen hergestellte Polyisocyanate (US 3 654 106), Estergruppen aufweisende Polyisocyanate (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstande, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4′- und/oder 2,4′-Diphenyl-methandiisocyanat ableiten.

Bei der Komponente b) handelt es sich um beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten, als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220, auf.

Geeignete Polyepoxide sind beispielsweise Polyglycidylether mehrwertiger Phenole, beispielsweise von Brenzkatechin, Resorcin, Hydrochinon, 4,4′-Dihydroxydiphenylmethan, von 4,4′-Dihydroxy-3,3′-dimethyldiphenylmethan, von 4,4′-Dihydroxydiphenylmethan, 4,4′-Dihydroxydiphenylcyclohexan, von 4,4′-Dihydroxy-3,3′-dimethyldiphenylpropan, von 4,4′-Dihydroxydiphenyl, aus 4,4′-Dihydroxydiphenylsulfon, von Tris-(4-hydroxyphenyl)-methan, den Chlorierungs- und Bromierungsprodukten der vorstehend genannten Diphenole, von Novolaken (d.h. aus Umsetzungsprodukten von ein- oder mehrwertigen Phenolen mit Aldehyden, insbesondere Formaldehyd, in Gegenwart saurer katalysatoren), von Diphenolen, die durch Veresterung von 2 Mol des Natriumsalzes einer aromatischen Oxicarbonsäure mit einem Mol eines Dihalogenalkans oder Dihalogendialkylethers erhalten wurde (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxipropyl)anilin, N,N′-Dimethyl-N,N′-diepoxipropyl-4,4′-diaminodiphenylmethan, N-Diepoxipropyl-4-amino-phenylglycidether (vgl. GB-PS 772 830 und 816 923).

Außerdem kommen in Frage: Glycidylester mehrwertiger aromatischer, aliphatischer und cylcoaliphatischer Carbonsäuren, beispielsweise Phthalsäurediglycidylester, Adipinsäurediglycidylester und Glycidylester von Umsetzungsprodukten aus 1 Mol eines aromatischen oder cylcoaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N′ -Diepoxipropyloxiamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexan, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Adler-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen aus Komponente b) verwendet:
Polyglycidylether mehrwertiger Phenole, insbesondere von Bisphenol A; Polyepoxidverbindungen auf der Basis von aromatischen Aminen, insbesondere Bis-(N-epoxipropyl)anilin, N,N′-Dimethyl-N,N′-diepoxipropyl-4,4′-diaminodiphenylmethan und N-Diepoxipropyl-4-amino-phenyl-glycidylether, Polyglycidylether aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2 bis 6), insbesondere 3 Mol Hexahydrophthalsäureanhydrid und einem Mol 1,1,1-Trimethylolpropan, 3,4-Epoxicyclohexylmethan-3,4-epoxicyclohexan-carboxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

In einer bevorzugten Ausführungsform wird eine Reaktionsharzmischung verwendet, die aus der Komponente a), b) und gegebenenfalls der Komponente d) besteht. In diesem Falle werden vorzugsweise, bezogen auf die Reaktionsharzmischung, 50 bis 99 Gew.-% der Komponente a) und 0,1 bis 50 Gew.-% der Komponente b) verwendet.

Als Polyhydroxylverbindungen c) können erfindungsgemäß nieder- bis mittelviskose, lineare oder verzweigte Polyetherpolyole und/oder Polyesterpolyole mit primären und/oder sekundären Hydroxylgruppen eingesetzt werden. Polyetherpolyole werden nach bekannten Verfahren durch Reaktion von mehrwertigen Stabmolekülen, wie Ethylen-, Propylenglykol, Glycerin, 1,4-Butandiol, Trimethylolpropan, Pentaerythrit, Sorbit, Hexantriol usw. oder deren Gemische mit Ethylenoxid und/oder Propylenoxid erhalten. Polyesterpolyole entstehen nach bekannten Verfahren bei der Reaktion von Polyalkoholen vom Typ, wie sie oben unter starken Methyl- sowie unter Polyetherpolyolen aufgeführt wurden oder deren Gemische mit organischen gesättigten und/oder ungesättigten Polycarbonsäuren oder deren Gemische vom Typ Adipinsäure, Sebazinsäure, Phthalsäure, Tetrahydrophthalsäure, Hexahydrophthalsäure, Maleinsäure und Fumarsäure. Weiterhin können als Polyhydroxylverbindungen Hydroxylgruppen-haltige Polymerisate, vorzugsweise wasserfreie Phenolharze, verwendet werden. Spezielle Beispiele hierfür sind Benzyletherphenolharze, Novolacke, Resole oder substituierte Phenolharze. Die Benzyletherphenolharze können durch Umsetzung eines gegebenenfalls substituierten Phenols mit einem Aldehyd hergestellt worden sein. Als Aldehyd ist Formaldehyd besonders bevorzugt. Das Mol-Verhältnis von Aldehyd zu Phenol ist großer als 1:1. Die Reaktion ist in flüssiger, im wesentlichen wasserfreier Phase bei Temperaturen unterhalb von etwa 130°C in Gegenwart katalytischer Mengen löslicher Metallsalze durchgeführt worden, die in dem Reaktionsmedium gelöst sind. Beispiele für geeignete Salze sind die Naphtenate, Neodekanoate, Octoate oder Lactate von Blei, Calcium, Zink, Zinn, Mangan, Kupfer oder Magnesium. Die ebenfalls als Polyhydroxylverbindungen geeigneten Kresolharze sind in gleicher Weise wie die vorgenannten Benzyletherphenolharze hergestellt worden, wobei jedoch die Umsetzung des Phenols mit dem Aldehyd in wäßriger Phase und im alkalischen Medium durchgeführt worden ist. Diese Materialien sind im wesentlichen neutral und enthalten einen erheblichen Prozentsatz an phenolischen Hydroxylgruppen. Im allgemeinen besitzen diese Resolharze oder Benzyletherphenolharze vorzugsweise ein Verhältnis von phenolischen Hydroxylgrupen zu aliphatischen Hydroxylgruppen von mindestens 3:1.

Weitere Hilfs- und Zusatzmittel d) sind z.B. anorganische oder organische Pigmente oder Weichmacher, wie z.B. Dioxylphthalattributylphosphat oder Triphenylphosphat. Als Lösungsmittel werden bevorzugt hochsiedende Lösungsmittel, wie aromatische und aliphatische Kohlenwasserstoffe, Ester, Ketone oder ähnliches, verwendet.

Mischungen aus 1,2-Epoxiden und Polyisocyanaten, gegebenenfalls auch unter Verwendung von Polyhydroxylverbindungen, sind bereits beschrieben worden (DE-AS 1 115 922, US 4 582 723). Diese Harze dienen als Elektroisolierstoffe für vielfältige Einsatzzwecke. Aus der DE-AS 3 600 764 sind bereits wärmehärtbare Reaktionsharzgemische bekannt, welche ein organisches Polyisocyanat, wenigstens eine, 2 Epoxidgruppen aufweisende organische Verbindung, einen durch Wärme aktivierbaren Katalysator und gegebenenfalls weiteres Hilfs- und Zusatzmittel enthalten. Die EP 129 799 beschreibt hitzehärtbare Reaktionsharzmischungen auf Basis von polyfunktionellen Isocyanaten als Präpolymerisate in Form von Umsetzungsprodukten aus Diphenylmethandiisocyanat und einem Diol sowie einem polyfunktionellen Epoxidharz. Alle diese oben beschriebenen Patente beschreiben nicht die Verwendung dieser Reaktionsharzgemische als Bindemittel für Gießereisande. Gegenstand dieser Anmeldungen ist vielmehr die Verwendung der Materialien als Gieß-oder Imprägnierharze für die Elektroindustrie. Bevorzugt wird dort auch überall eine Anhärtung bzw. Aushärtung bei Temperaturen oberhalb 100°C bis zu 200°C bzw. 250°C empfohlen. Dies widerspricht dem hier verwendeten Begasungsverfahren, bei dem die Reaktion und die Aushärtung bei Raumtemperatur allein durch den mit dem Luftstrom zugeführten Aminkatalysator erfolgt.

Die in einer besonderen Ausführungsform der Anmeldung verwendeten lagerstabilen Mischungen aus einem Teil der Komponente a) und zumindest einem Teil der Komponente b) sind in der DE-A-3 807 660 beschrieben. Die in einer weiteren besonderen Ausführungsform dieser Erfindung erwähnten Mischungen aus zumindest einem Teil der Komponente a) mit zumindest einem Teil der Komponente b), die in einem vorgeschalteten Reaktionsschritt zu einem Oxazolidinon- und Isocyanuratgruppen aufweisenden Zwischenprodukt umgesetzt werden und die Reaktion bei einer Umsetzung von max. 65 % der im Ausgangsgemisch vorliegenden Isocyanatgruppen durch Zugabe eines Reaktionsinhibitors abgebrochen wird, sind Gegenstand der DE-A-3 644 382.

Insbesondere bei Mitverwendung der Polyhydroxylverbindungen erfolgt die Anwendung dieses Reaktionsharzmischsystems normalerweise als Zweikomponentensystem. Die beiden Komponenten werden erst kurz vor Verarbeitung und Mischen mit dem Sand zusammengefügt. Die erste Komponente ist gewöhnlicherweise das organische Polyisocyanat und die zweite Komponente die Polyhydroxylverbindung.

Die Epoxidgruppen enthaltende organische Verbindung kann sowohl zu der Polyhydroxylverbindung zugegeben werden oder unter Beachtung der DE-A-36 44 382 bzw. DE-A-38 07 660 auch dem organischen Polyisocyanat zugefügt werden. Wie bereits ausgeführt, werden beide Komponenten normalerweise durch Zugabe oben beschriebener Lösungsmittel auf verarbeitbare Viskositäten verdünnt. Ohne Verwendung von Polyhydroxylverbindungen kann unter Beachtung der DE-A-36 44 382 und DE-A-38 07 660 eine lagerstabile Einkomponentenmischung hergestellt werden, die eine weitere Vereinfachung des Sandaufbereitungsverfahrens darstellt.

Zur Herstellung der Bindemittel/Sand-Mischung sowie die weitere Verarbeitung zu den fertigen Kernsänden ist ausführlich in der US-Patentschrift 3 409 579 der Firma Ashland beschrieben. Es sollte Quarzsand der Körnung H 32 bzw. H 31 verwendet werden. Als Mischer eignen sich alle Flügel- und Schaufelmischertypen. Der Sand wird vorgelegt und mit den Komponenten der Reatkionsharzmischung versetzt und ca. 1 bis 2 min lang gemischt. Anschließend ist diese gut fließfähige Sandmischung verarbeitungsfertig. Zur Kernherstellung dient eine Kernschießmaschine mit einem entsprechenden Begasungszusatzgerät. Der Schießdruck kann aufgrund der sehr guten Fließfahigkeit des Sandes je nach Kernart auf 3 bis 4 atü verringert werden, ohne daß die Güte der Kernoberfläche dadurch beeinträchtigt wird. Kernkästen aus Epoxidgießharz und Holz können eingesetzt werden. Der Anteil von Bindemittel bezogen auf Sand beträgt bevorzugt 0,25 bis 5 Gew.-%. Der flüssige Katalysator wird mit einem inerten Trägergas, wie z.B. Luft in den Kern eingebracht und härtet beim Kontakt mit dem Härter schlagartig den Kern aus, Dabei ist es wichtig, daß der Katalysator alle Kernpartien erreicht, was z.B. mit einer Dornbegasung und Entlüftung mit entsprechenden Düsen möglich ist, Die Bedingungen für eine optimale Begasung sind von Fall zu Fall zu klären. Der Katalysator wird mit einem Gasstrom mit 1,5 bis 2 atü versprüht. Ein Nachblasen von Gas mit rund 4 bis 6 atü ist zweckmäßig, um den Katalysator gut zu verteilen und einen etwaigen Überschuß gleichzeitig über die Düsen hinauszublasen. Die Katalysatormenge richtet sich ausschließlich nach Art und Größe des Kernes und ist somit am besten experimentell zu ermitteln. Üblicherweise sollten wenige Minuten, im Optimalfall ca. 1 min, ausreichen. Die Zeit für das Nachblasen der Luft soll in jedem Fall doppelt so lang sein, wie die Begasungszeiten mit dem Katalysator. Als Katalysatoren werden tertiäre Amine, bevorzugt niederflüchtige tertiäre Amine, verwendet, wie z.B. Trimethylamin, Triethylamin, Dimethylethylamin, Dimethylisopropylamin, Dimethylethanolamin, Dimethylbenzylamin und ähnliche Produkte.

Die Erfindung wird durch nachfolgende Beispiele ausgeführt:

### Beispiele

### Allgemeines Verfahren der Kernsandaufbereitung und Kernherstellung

1000 g Sand H 31 werden vorgelegt und mit 30 g der unten näher beschriebenen Bindemittelmischung gut verrührt. Diese Sandmischung wird in die Form eines Standardbegasungsgerätes gegeben und 60 s mit einem Triethylamin/Luft-Gemisch begast. Anschließend wird der fertige, gebundene Sand-Kern entformt und auf Aussehen und Festigkeit beurteilt.

Der Sand wird in verschlossenen Gebinden bei Raumtemperatur gelagert. Nach gewissen Abständen (vgl. Tabelle 1) wird die Rieselfähigkeit des Sandes beurteilt sowie die Qualität eines gehärteten Sandkerns.

### Beschreibung der Bindemittel

Alle Bindemittel werden als 80 %ige Lösung in einem Gemisch von Alkylaromaten verwendet.
"T" steht für Teile.

### BM 1

80 T Gemisch von 2,4- und 4,4_MDI im Verhältnis 1:1
20 T Bisphenol A-diglycidylether
nach DE-A-3 807 660, durch Zusatz von 1000 ppm p-Toluolsulfonsäuremethylester bei 100°C lagerstabil eingestellt.

### BM 2

80 T Gemisch von 2,4- und 4,4-MDI,
20 T Bisphenol A-diglycidylether,
nach DE-A-3 644 382 auf einen NCO-Gehalt von 20 % anreagiert und anschließend lagerstabil eingestellt.

### BM 3

100 T BM 4
20 T Polyetherpolyol aus propoxyliertem Triethylolpropan, OH-Gehalt: 11 %

### BM 4

60 T Gemisch von 2,4- und 4,4-MDI,
40 T Bisphenol A-diglycidylether,
nach DE-A-3 807 660 lagerstabil eingestellt.

### BM 5

95 T Gemisch von 2,4- und 4,4-MDI,
5 T Bisphenol A-diglycidylether.

### BM 6

99,2 T Gemisch von 2,4- und 4,4-MDI,
0,8 T Bisphenol A-diglycidylether.

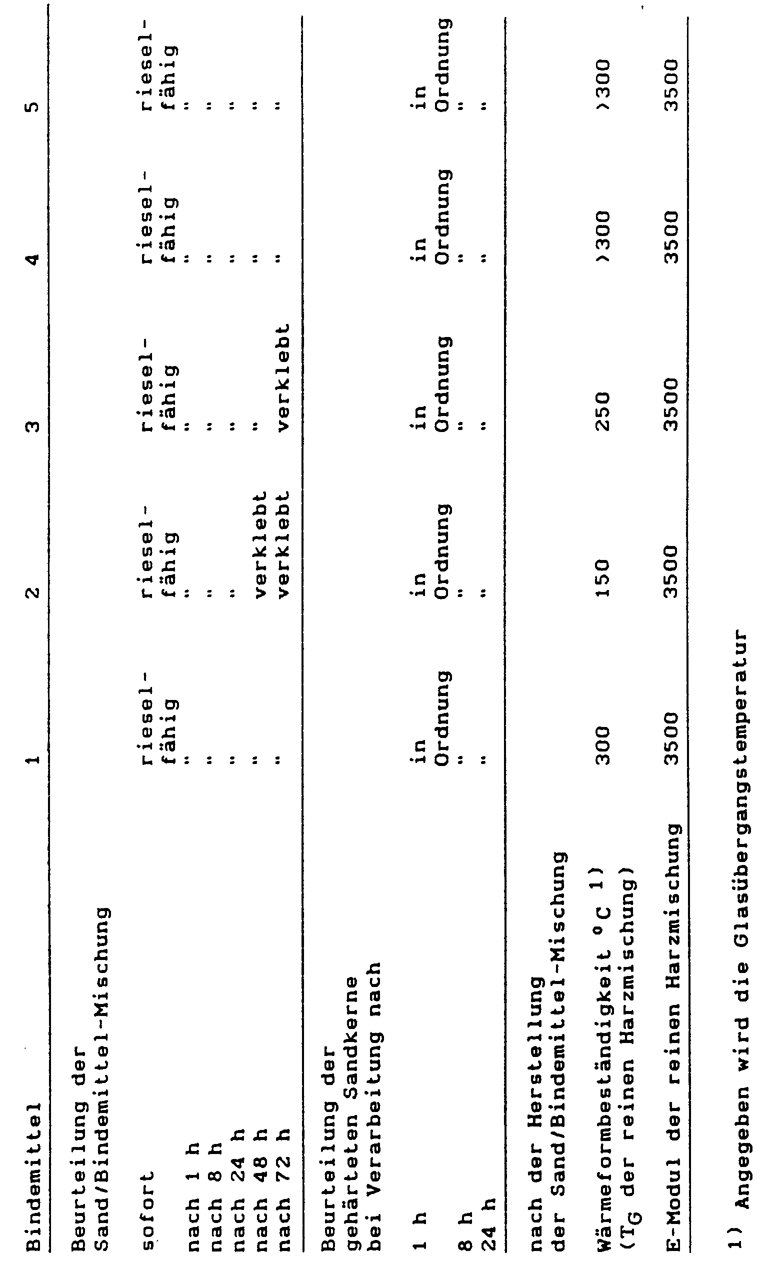

## Patentansprüche

1. Verfahren zur Herstellung von Gießereikernen und -formen aus Füllstoffen und einer Reaktionsharzmischung durch Vermischen des Füllstoffes und des Reaktionsharzes und anschließende Härtung, dadurch gekennzeichnet, das als Reaktionsharzmischung eine Mischung aus folgenden Komponenten verwendet wird:
a) 25 bis 99,9 %, bezogen auf die Gesamtharzmenge, mindestens eines organischen Polyisocyanates,
b) 0,1 bis 50 %, bezogen auf die Gesamtharzmenge, mindestens einer - mindestens zwei Epoxidgruppen aufweisenden - organischen Verbindung und gegebenenfalls
c) 0 bis 50 %, bezogen auf Gesamtharzmenge, von Polyhydroxyl-Verbindungen sowie gegebenenfalls
d) weiteren Hilfs-, Zusatz- und Lösungsmitteln.

2. Verfahren nach Anspruch 1, dadurch gekennzeichnet, das als Füllstoff Sand verwendet wird.

3. Verfahren nach wenigstens einem der vorhergehenden Ansprüche, dadurch gekennzeichnet, das die Mischung aus dem Füllstoff der Reaktionsharzmischung geformt wird und anschließend nach dem Begasungsverfahren durch Einbringung eines Katalysators gehärtet wird.

4. Verfahren nach wenigstens einem der vorhergehenden Ansprüche, dadurch gekennzeichnet, daß das Verhältnis von reaktivem Isocyanat zu Hydroxylgruppen in der Reaktionsharzmischung größer als 1,1:1, bevorzugt größer als 1,5:1, ist.

5. Verfahren nach wenigstens einem der vorhergehenden Ansprüche, dadurch gekennzeichnet, daß das Reaktionsharz aus den Komponenten a), b) und gegebenenfalls d) besteht.

6. Verfahren nach wenigstens einem der vorhergehenden Ansprüche, dadurch gekennzeichnet, daß das Polyisocyanat a) folgender Formel entspricht
Q (NCO)ₙ,
in der
n = 2 bis 4 und
Q einen aliphatischen Kohlenwasserstoffrest mit 2 bis 18,
einen cycloaliphatischen Kohlenwasserstoffrest mit 4 bis 15,
einen aromatischen Kohlenwasserstoffrest mit 6 bis 15 oder
einen araliphatischen Kohlenwasserstoffrest mit 8 bis 15 C-Atomen bedeutet.

7. Verfahren nach wenigstens einem der vorhergehenden Ansprüche, dadurch gekennzeichnet, daß als Polyisocyanat a) ein Polyisocyanat der Diphenylmethanreihe verwendet wird.

8. Verfahren nach wenigstens einem der vorhergehenden Ansprüche, dadurch gekennzeichnet, daß zumindest ein Teil der Komponente a) mit zumindest einem Teil der Komponente b) in einem vorgeschalteten Reaktionsschritt gemischt und in einen lagerstabilen Zustand überführt wird.

9. Verfahren nach wenigstens einem der vorhergehenden Ansprüche, dadurch gekennzeichnet, daß zumindest ein Teil der Komponente a) mit zumindest einem Teil der Komponente b) in einem vorgeschalteten Reaktionsschritt zu einem Oxazonidinon- und Isocyanurat-Gruppen aufweisenden Zwischenprodukt umgesetzt wird und die Reaktion bei einer Umsetzung von max. 65 % der im Ausgangsgemisch vorliegenden Isocyanatgruppen abgebrochen wird und so in einen lagerstabilen Zustand überführt wird.

10. Verfahren zur Herstellung von Gußstücken unter Verwendung von Gießereikernen und/oder -formen, dadurch gekennzeichnet, das ein Gießereikern bzw. eine Gießereiform verwendet wird, die gemäß wenigstens einem der vorhergehenden Ansprüche erhalten worden ist.

## Claims

1. A process for the production of foundry cores and moulds of fillers and a casting resin mixture by mixing of the filler and the casting resin and subsequent curing, characterized in that a mixture of the following components is used as the casting resin:
a) 25 to 99.9%, based on the total quantity of resin, of at least one organic polyisocyanate,
b) 0.1 to 50%, based on the total quantity of resin, of at least one organic compound containing at least two epoxide groups and, optionally,
c) 0 to 50%, based on the total quantity of resin, of polyhydroxyl compounds and, optionally,
d) other auxiliaries, additives and solvents.

2. A process as claimed in claim 1, characterized in that sand is used as the filler.

3. A process as claimed in at least one of the preceding claims, characterized in that the mixture of the filler and the casting resin mixture is moulded and is then cured by the cold box process by introduction of a catalyst.

4. A process as claimed in at least one of the preceding claims, characterized in that the ratio of reactive isocyanate to hydroxyl groups in the casting resin mixture is greater than 1.1:1 and preferably greater than 1.5:1.

5. A process as claimed in at least one of the preceding claims, characterized in that the casting resin consists of components a), b) and, optionally, d).

6. A process as claimed in at least one of the preceding claims, characterized in that the polyisocyanate a) corresponds to the following formula
Q(NCO)ₙ
in which
n = 2 to 4 and
Q is an aliphatic hydrocarbon radical containing 2 to 18 carbon atoms, a cycloaliphatic hydrocarbon radical containing 4 to 15 carbon atoms, an aromatic hydrocarbon radical containing 6 to 15 carbon atoms or an araliphatic hydrocarbon radical containing 8 to 15 carbon atoms.

7. A process as claimed in at least one of the preceding claims, characterized in that a polyisocyanate of the diphenyl methane series is used as the polyisocyanate a).

8. A process as claimed in at least one of the preceding claims, characterized in that at least part of component a) is mixed with at least part of component b) in a preliminary reaction step and the resulting mixture is converted into a storable form.

9. A process as claimed in at least one of the preceding claims, characterized in that at least part of component a) is reacted with at least part of component b) in a preliminary reaction step to form an intermediate product containing oxazolidinone and isocyanurate groups and the reaction is terminated at a conversion of at most 65% of the isocyanate groups present in the starting mixture and the reaction product is thus converted into a storable form.

10. A process for the production of castings using foundry cores and/or moulds, characterized in that a foundry core or foundry mould obtained by the process claimed in at least one of the preceding claims is used.

## Revendications

1. Procédé pour la fabrication de noyaux et moules de fonderie à partir de matières de charge et d'un mélange résineux réactif par mélange de la matière de charge et de la résine réactive suivi d'un durcissement, caractérisé en ce que le mélange résineux réactif utilisé est un mélange des composants suivants :
a) 25 à 99,9 %, par rapport aux résines totales, d'au moins un polyisocyanate organique,
b) 0,1 à 50 %, par rapport aux résines totales, d'au moins un composé organique contenant au moins deux groupes époxydes, et le cas échéant
c) 0 à 50 %, par rapport aux résines totales, de composés polyhydroxylés et le cas échéant
d) d'autres produits auxiliaires, additifs et solvants.

2. Procédé selon la revendication 1, caractérisé en ce que la matière de charge utilisée est le sable.

3. Procédé selon au moins une des revendications qui précédent, caractérisé en ce que le mélange de la matière de charge et du mélange résineux réactif est moulé puis durci par introduction d'un catalyseur par injection à l'état gazeux.

4. Procédé selon au moins une des revendications qui précédent, caractérisé en ce que, dans le mélange résineux réactif, le rapport entre l'isocyanate réactif et les groupes hydroxy est supérieur à 1,1:1 et de préférence supérieur à 1,5:1.

5. Procédé selon au moins une des revendications qui précèdent, caractérisé en ce que la résine réactive consiste en les composants a), b) et le cas échéant d).

6. Procédé selon au moins une des revendications qui précèdent caractérisé en ce que le polyisocyanate a) répond à la formule
Q (NCO)ₙ,
dans laquelle
n = 2 à 4,
et
Q représente un radical hydrocarboné aliphatique en C₂-C₁₈,
un radical hydrocarboné cycloaliphatique en C₄-C₁₅,
un radical hydrocarboné aromatique en C₆-C₁₅, ou bien
un radical hydrocarboné araliphatique en C₈-C₁₅.

7. Procédé selon au moins une des revendications qui précèdent, caractérisé en ce que le polyisocyanate a) est un polyisocyanate de la série du diphénylméthane.

8. Procédé selon au moins une des revendications qui précèdent, caractérisé en ce que, dans un stade de réaction préalable, on mélange une partie au moins du composant a) avec une partie au moins du composant b) et on fait passer le mélange dans un état stable à la conservation.

9. Procédé selon au moins une des revendications qui précèdent, caractérisé en ce que, dans un stade de réaction préalable, on convertit une partie au moins du composant a) et une partie au moins du composant b) en un produit intermédiaire contenant des groupes oxazolidinones et isocyanurates, et on arrête la réaction à un taux de conversion maximum de 65 % des groupes isocyanates présents dans le mélange initial, ce qui rend le mélange stable à la conservation.

10. Procédé pour la fabrication de pièces coulées avec utilisation de noyaux et/ou moules de fonderie, caractérisé en ce que l'on utilise un noyau de fonderie et/ou un moule de fonderie obtenus selon au moins une des revendications qui précèdent.
